# EUROPEAN PATENT SPECIFICATION

(11) **EP 0 423 942 B1**
(45) Date of publication and mention of the grant of the patent: **10.01.1996**
(21) Application number: 90310233.3
(22) Date of filing: 19.09.1990
(51) Int. Cl.: H04J 14/02

(54) **Synchronous network**
Synchrones Netzwerk
Réseau synchrone

(30) Priority: 17.10.1989 GB 8923351; 20.12.1989 GB 8928698
(43) Date of publication of application: 24.04.1991
(73) Proprietor: NORTHERN TELECOM LIMITED, Montreal, Quebec H2Y 3Y4 (CA)
(72) Inventor: Westmore, Richard James, Willingham, Cambridge CB4 5JU (GB)
(74) Representative: Ryan, John Peter William

(56) References cited:
- EP-A- 0 310 058
- DE-A- 3 419 087
- IEEE JOURNAL OF SELECTED AREAS IN COMMUNICATIONS, vol. 6, no. 9, 1st December 1988, pages 1500-1510, IEEE, New York, US; E. ARTHURS et al.: "HYPASS: an optoelectronic hybrid packet switching system"
- IBM TECHNICAL DISCLOSURE BULLETIN, vol. 32, no. 4B, 1st September 1989, pages 477-483, New York, US; Nomen NESCIO: "Passive optical star with WDM couplers for hybrid access control and overflow prevention"
- JOURNAL OF LIGTHWAVE TECHNOLOGY, vol. LT-3, no. 3, 1st June 1985, pages 467-471, IEEE, New York, US; T. HERMES et al.: "LOCNET - A local area network using optical switching"

## Description

This invention relates to networks for the transmission of data between a number of nodes or terminals.

Network systems for the transmission of data between a plurality of modes or terminals are of increasing interest in the data processing field. For example, optical systems utilising fibre optic transmission with various network configurations, employing either active or passive couplers and dividers with both wavelength and time division multiplexing, are being developed at the present time. Uses include broadband overlay for subscriber access network and ultra-high capacity packet switching for telecommunication or parallel processing computer applications. See for example A. Oliphant "Progress in the development of a digital optical routing system for television studio centres", International Broadcasting Convention IBC 88, Brighton, Sept. 88, IEE Conference Publication No. 293 pp 90-94, D B Payne & J R Stern "Single mode optical local networks", Conf. Proc. Globecom '85, Houston, paper 39.5 and E Authurs et al "A fast optical cross connect for parallel processing computers" Proc. 13th European Conference on Optical Communication, Helsinki, Finland, Sept. 1987. An Optoelectronic hybrid packet switch is described by E Arthurs et al in IEEE Journal on Selected Areas in Communications Vol. 6, No 9 (December 1988) pages 1500 to 1510, "HYPASS: An Optoelectronic Hybrid Packet Switching System". A local area network using optical switching is described by T Hermes et al in Journal of Lightwave Technology, LT-3 (1985) June, No. 3, pages 467 to 471.

Such systems offer capacities which are orders of magnitude greater than electronic (time multiplexed) networks, complete flexibility of interconnect configuration, service transparency and considerable facility for future upgrades.

In order to make a particular connection between the nodes of such a network the optical receiver in the receiving node must be tuned into the same wavelength as the required transmitter. The switching and reconfiguration of connections in the network can be achieved either by switching the wavelength of transmission with fixed separate wavelength receivers at each node or by using fixed separate wavelength transmitters in each node and switched wavelength receiver.

For high speed reconfiguration of the interconnection pattern such as required by telecoms or computer packet switching applications it is necessary to devise a very rapid communication protocol between the nodes for setting up the required interconnection pattern. This is very much easier to achieve using wavelength switched transmitters and fixed wavelength receivers because in this case the network becomes "self routing" with messages automatically directed by the transmitter to the correct receiver. A good example of such a network is the above mentioned "HYPASS" system . A disadvantage with this type of network is that it requires wavelength switched transmitter components which are very difficult to fabricate with adequate performance. A further disadvantage of conventional networks is the difficulty of providing a broadcast facility in which one node can broadcast a message to all the other nodes. This can introduce severe problems in maintaining the correct time sequence of signals.

The object of the present invention is to minimise or to overcome these disadvantages.

According to one aspect of the invention there is provided a data communications network comprising a plurality of terminal stations or nodes interconnected by an optical communications medium via a common star, wherein each said terminal broadcasts messages via the common star to all the terminals including itself, wherein messages are transmitted in a sequence of frames, characterised in that each frame comprises a plurality of messages one for each said terminal, the messages within a frame being received concurrently and in parallel, that any one said terminal can provide a frame timing reference for the other terminals of the system, that each terminal has means for determining from the delay between the transmission and receipt of its own message its distance in terms of frame times from the star, that each terminal has means for transmitting its determined distance to all said terminals, and that each said terminal has means for determining from its own distance and the distances of the other terminals from the star a delay to apply an acknowledgement to each transmitted message such that all acknowledgements for a said message arrive at the sending terminal in the same frame. and that each said terminal has means for ordering received messages into the order of reception of frames and into a predetermined order within each frame.

Reference is directed to our copending application No. 8826156.5 (published May 16 th 1990 an EP-A-0 368 566) which relates to a multi-wavelength optical network comprising a plurality of nodes interconnected via a single common passive optical coupler wherein all signals transmitted over the network are synchronous at the coupler, each node receiving signals from all the nodes and each node including wavelength demultiplexing means.

An embodiment of the invention will now be described with reference to the accompanying drawings in which:
Fig. 1 is a general schematic diagram of a synchronous multi-frequency optical network;
Fig. 2 illustrates the transmission of broadcast frames of information around the network of Fig. 1;
Fig. 3 shows a typical frame format.
   and
Fig. 4 is a schematic diagram of a system node.

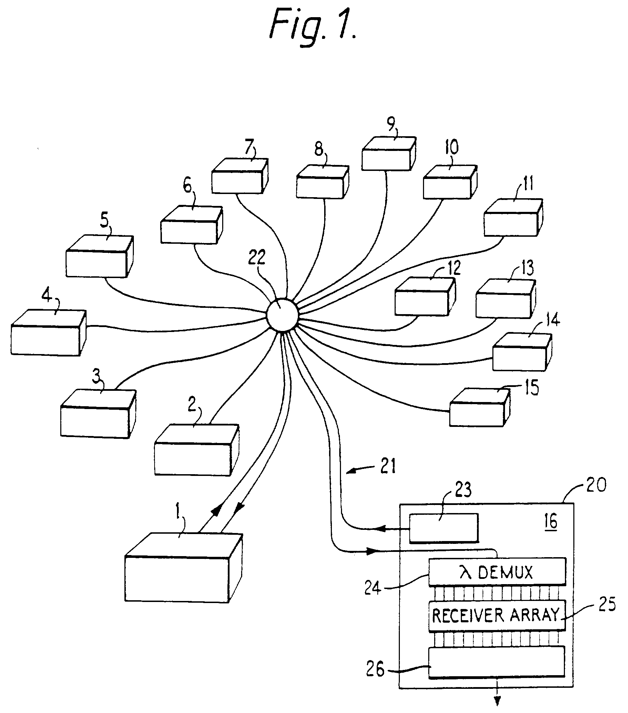

In the network of Fig. 1, a number of identical node equipments 20 are interconnected by optical fibre transmission paths 21 via a common passive optical star coupler 22. The star provides a reference point through which all transmissions are routed. The design of the star coupler is such that there is only a single path from each input to every output. In the example shown there are sixteen nodes, the node illustrated in more detail being number 16. It will however be appreciated that the technique is not restricted to this particular number of nodes. Each node has a single wavelength optical transmitter 23, the wavelength being different for each node 20 of the system. Signals from any one node are propagated via the fibre and star coupler network to all system nodes, including the node which originates the signals.

Each node also includes a wavelength demultiplexer 24 wherein the signals from all the nodes are demultiplexed into sixteen channels and applied via a multichannel receiver array 25 to an output circuit 26. Typically a wavelength demultiplexer uses a diffraction grating and lens to direct each separate channel wavelength signal to a separate detector.

One system node, e.g. node 1, functions as a reference node, and all other nodes are synchronised with this reference node at the start coupler. To effect this synchronisation, each node (except node 1) adjusts its frame transmission timing so that its returning signal is synchronised with that arriving from node 1. This provides automatic compensation for the different propagation delays between each node and the common star coupler.

When the system is turned on, all the nodes synchronise their frames with frames from the reference node without regard to phase. The reference node may be determined e.g. by selecting the lowest wavelength present at the time of initial system configuration or by some other mutually agreed method which allows each node to determine the reference node independently. Each terminal or mode determines, from the delay between transmission and receipt of its own message, its own distance in frame times from the star of reference point of the network. This information is transmitted by each node to all the other nodes attached to the system. From this received information and from the determination of its distance from the star, each mode determines the correct delay to apply to each acknowledgement such that all node acknowledgements for a particular message arrive at the sender in the same frame. I.e. all acknowledgements arrive together at the sending node. In an alternative embodiment, each node may apply a delay sufficient to accommodate a network containing a node on a maximum radius arm. This approach reduces the complexity of the start-up procedure but imposes the maximum acknowledgement delay which could occur in any network on all networks.

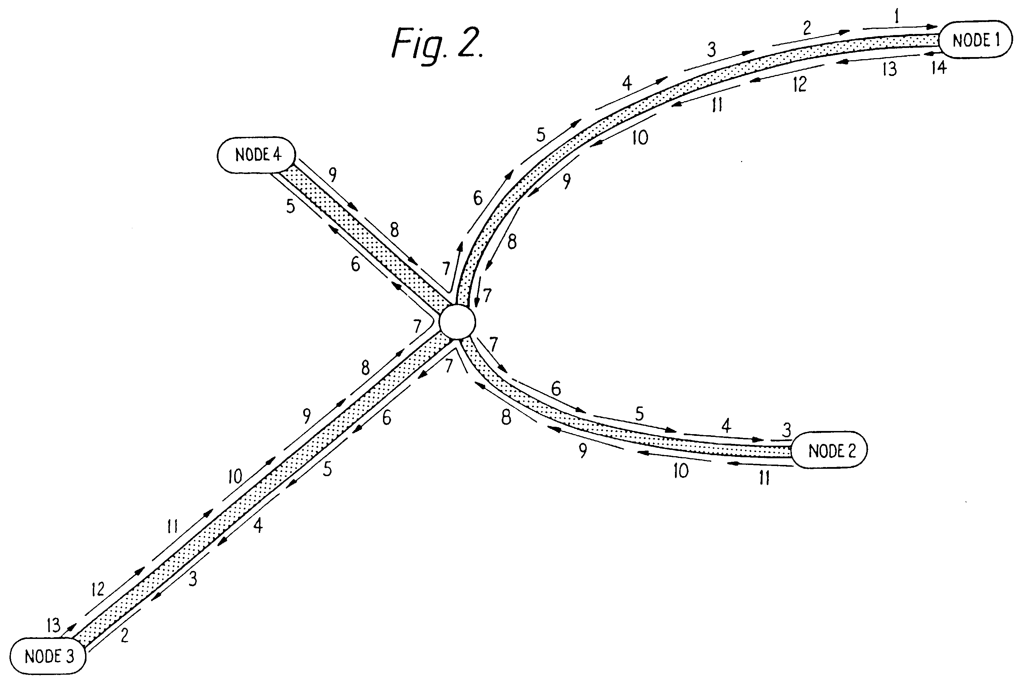

Each node with a public write to send transmits it on its own optical frequency in the data packet of the work frame. No arbitration or priority resolution is required. The frames are fixed in length and may be short in comparison to the time taken for a frame to transit the network. Typically the frames each comprise 64 bytes and each occupy a time period of 0.5 to 1 microsecond. The transmission format is illustrated in Fig. 2, which, for clarity shows a four terminal network. In Fig. 2 the frames are numbered to indicate their relative timestamp positions. All nodes receive all the data packets from all nodes, including their own.

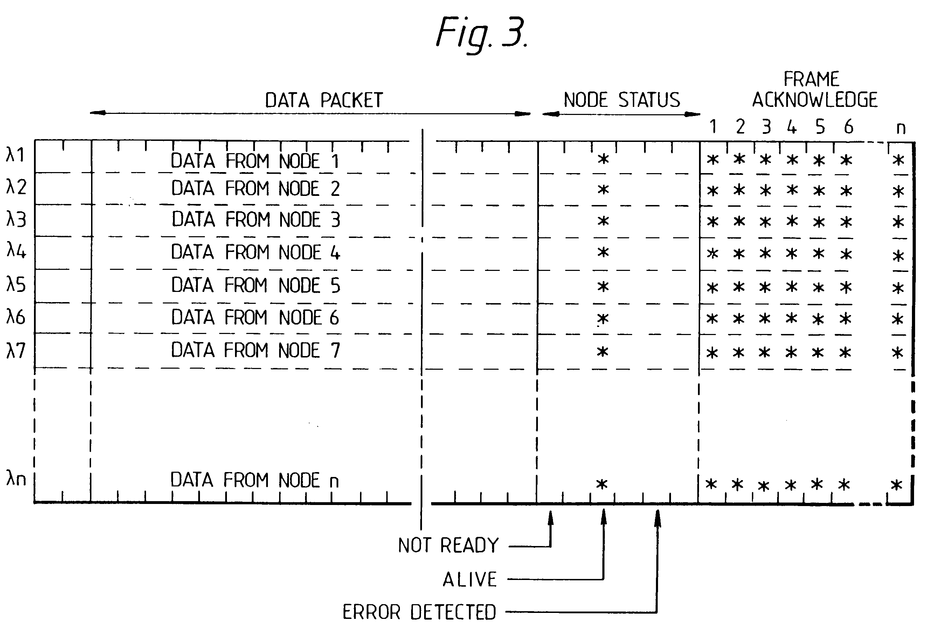

The frame format is illustrated in Fig. 3 of the accompanying drawings. As can be seen from Fig. 3, each node writes in data at its own node frequency fₙ. Each frame can carry in parallel, data from all the system nodes thus providing efficient use of the system bandwidth. The first column of the frame may contain a timing/supervisory bit.

The received data packets within a frame are treated as having been received in the same order in which the wavelengths are numbered. This is equivalent to resolving timestage order using a number issued by a token circulating the central star in the order of the wavelength numbering, pausing briefly at each node to issue it with a number before incrementing itself and proceeding to the next node. Consequently, each node remains in a fixed time order relative to the other nodes of the network. As the frames are short in comparison to the transit time, a high degree of timestage resolution is provided. In an alternative embodiment, each terminal may prefix its message with a unique code identifying that terminal for time ordering purposes.

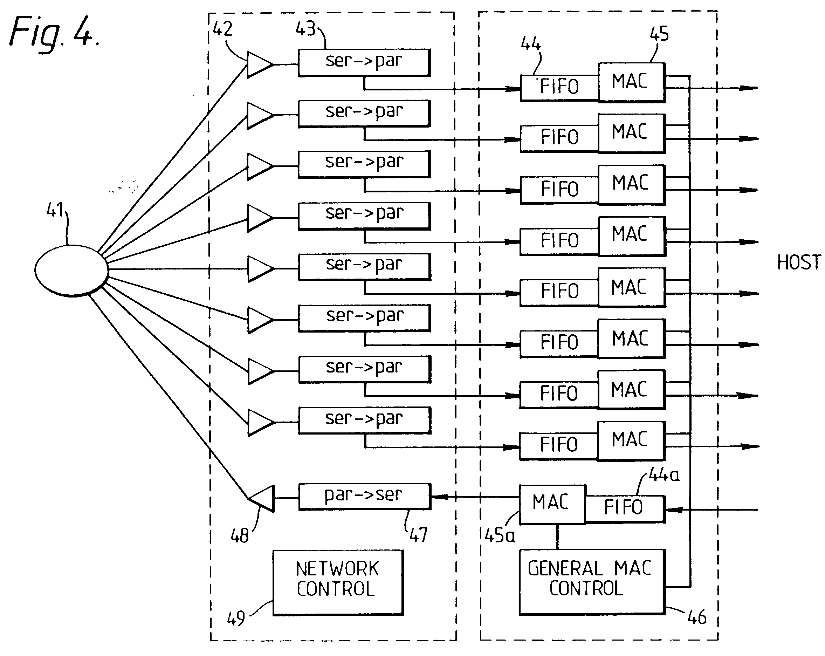

Referring now to Fig. 4, each system node includes a wavelength demultiplexor 41, e.g. a diffraction grating, having a plurality of outputs one for each system wavelength. The demultiplexor outputs are coupled each to a corresponding receiver 42 the output of which is fed to a series/parallel converter 43.

The outputs of the series/parallel converters 43 are coupled each to a first-in-first-out (FIFO) store 44. Readout of the FIFO store in the correct sequence within each frame is controlled via memory access circuits 45 by a general control circuit 46. The control circuit 46 also controls transmission of signals from the terminal via a further FIFO store 44a and a further memory access circuit 45a. The transmitter signals are then fed via a parallel/series converter 47 to a transmitter 48 whereby the signal is launched into the network. A network control circuit 49 determines synchronisation of the terminal with the network. The system node of Fig. 4 order receivers messages into the order of reception of frames and, within each frame, order messages according to their corresponding wavelength.

The latency experienced by a node waiting to receive its own message back from the centre star, and hence resolve its own time stamp order, is twice the delay imposed by its own arm of the network. The effect of this is that nodes with short links to the centre of the star experience less latency than more distant nodes. This situation is illustrated in Figure 2 where node 4 experiences the shortest latency and node 1 the longest latency.

The network provides message acknowledgement at the physical level. The acknowledgement of receipt of messages in each node is delayed by a number of frame times sufficient to ensure that the acknowledgment arrives at the centre star at the same time as the undelayed acknowledgment for the same frame from the most distant node. This allows all acknowledgements for a given frame to be received back at the transmitting node simultaneously n frames later.

Each node also transmits status information to assist with rapid error detection and flow control. The exact nature of the status information required has not been determined but may include: not-ready, I am alive, and no-errors-detected.

The network described above is of particular application in the coupling of a plurality of computers or data processors having shared data. It is not however limited to this application and may also, for example, be employed in the interconnection of a number of telephone exchanges for the interchange of informing data.

It will be understood that whilst the technique is of particular advantage for optical networks, it may also be employed in non-optical systems.

## Claims

1. A data communications network comprising a plurality of terminal stations or nodes (20) interconnected by an optical communications medium (21) via a common star (22), wherein each said terminal broadcasts messages via the common star to all the terminals including itself, wherein messages are transmitted in a sequence of frames, characterised in that each frame comprises a plurality of messages one for each said terminal, the messages within a frame being received concurrently and in parallel, that any one said terminal can provide a frame timing reference for the other terminals of the system, that each terminal has means for determining from the delay between the transmission and receipt of its own message its distance in terms of frame times from the star, that each terminal has means for transmitting its determined distance to all said terminals, and that each said terminal has means for determining from its own distance and the distances of the other terminals from the star a delay to apply an acknowledgement to each transmitted message such that all acknowledgements for a said message arrive at the sending terminal in the same frame. and that each said terminal has means for ordering received messages into the order of reception of frames and into a predetermined order within each frame.

2. A system as claimed in claim 1, characterised in that each said terminal (20) has a single frequency (wavelength) optical transmitter (23), that frequency being unique to that terminal, and that each said terminal has a multichannel receiver (25) having channels one for each said frequency including that of that terminal's transmitter.

3. A network as claimed in claim 2, characterised in that each said frame comprises for each frequency within the frame, a data packet, node status information and frame acknowledge information.

## Patentansprüche

1. Datenkommunikationsnetzwerk mit einer Vielzahl von Endgerätestationen oder Netzwerkknoten (20), die durch ein optisches Kommunikationsmedium (21) über einen gemeinsamen Sternpunkt (22) miteinander verbunden sind, wobei jedes Endgerät eine Punkt-zu-Mehrpunkt-Nachrichtenübertragung über den gemeinsamen Sternpunkt an alle Endgeräte unter Einschluß von sich selbst ausführt, wobei die Nachrichten in einer Folge von Rahmen übertragen werden,
dadurch gekennzeichnet, daß jeder Rahmen eine Vielzahl von Nachrichten, jeweils eine für jedes der Endgeräte umfaßt, wobei die Nachrichten in einem Rahmens gleichzeitig und parallel empfangen werden, daß irgendeines der Endgeräte einen Rahmen-Zeitsteuerbezugswert für die anderen Endgeräte des Systems liefern kann, daß jedes Endgerät Einrichtungen zur Ermittlung seiner Entfernung in Ausdrücken von Rahmenzeiten von dem Sternpunkt aus der Verzögerung zwischen der Aussendung und dem Empfang seiner eigenen Nachricht aufweist, daß jedes Endgerät Einrichtungen zur Übertragung seiner so ermittelten Entfernung an alle Endgeräte aufweist, und daß jedes Endgerät Einrichtungen aufweist, die aus seiner eigenen Entfernung und den Entfernungen der anderen Endgeräte von dem Sternpunkt eine Verzögerung bestimmen, die auf eine Bestätigung für jede übertragene Nachricht anzuwenden ist, derart, daß alle Bestätigungen für eine derartige Nachricht an dem sendenden Endgerät in dem gleichen Rahmen ankommen, und daß jedes der Endgeräte Einrichtungen zum Einordnen empfangener Nachrichten in der Reihenfolge des Empfanges der Rahmen und in einer vorgegebenen Reihenfolge in jedem Rahmen aufweist.

2. System nach Anspruch 1, dadurch gekennzeichnet, daß jedes Endgerät (20) einen eine einzige Frequenz (Wellenlänge) aufweisenden optischen Sender (23) aufweist, daß diese Frequenz für dieses Endgerät eindeutig ist, und daß jedes der Endgeräte einen Mehrkanal-Empfänger (25) aufweist, der jeweils einen Kanal für jeweils eine der Frequenzen unter Einschluß der des Senders des Endgerätes aufweist.

3. Netzwerk nach Anspruch 2, dadurch gekennzeichnet, daß jeder Rahmen für jede Frequenz innerhalb des Rahmens ein Datenpaket, Netzwerkknoten-Statusinformation und Rahmenbestätigungsinformation umfaßt.

## Revendications

1. Réseau de communications de données comprenant plusieurs noeuds ou stations terminales (20) interconnectés par un support optique (21) de communication par l'intermédiaire d'une étoile commune (22), dans lequel chaque terminal émet des messages par l'intermédiaire de l'étoile commune vers tous les terminaux, y compris lui-même, dans lequel les messages sont transmis sous forme d'une série de séquences, caractérisé en ce que chaque séquence comprend plusieurs messages à raison d'un message par terminal, les messages d'une séquence étant reçus simultanément et en parallèle, en ce que l'un quelconque des terminaux peut former une référence de synchronisation de séquence pour les autres terminaux du système, en ce que chaque terminal comporte un dispositif de détermination, d'après le retard entre l'émission et la réception de son propre message, de la distance à l'étoile exprimée en durées de séquence, en ce que chaque terminal possède un dispositif de transmission de sa distance déterminée à tous les terminaux, en ce que chaque terminal comporte un dispositif de détermination, à partir de sa propre distance et des distances des autres terminaux à l'étoile, d'un retard afin qu'un accusé de réception soit appliqué à chaque message transmis, si bien que tous les accusés de réception d'un message arrivent au terminal émetteur dans la même séquence, et en ce que chaque terminal comporte un dispositif destiné à ordonner les messages reçus dans l'ordre de réception des séquences et dans un ordre prédéterminé à l'intérieur de la séquence.

2. Système selon la revendication 1, caractérisé en ce que chaque terminal (20) a un émetteur optique à une seule fréquence (longueur d'onde) (23), en ce que la fréquence est propre à ce terminal, et en ce que chaque terminal a un récepteur (25) à plusieurs canaux à raison d'un par fréquence, y compris celle de l'émetteur du terminal.

3. Réseau selon la revendication 2, caractérisé en ce que chaque séquence comporte, pour chaque fréquence de la séquence, un paquets de données, des informations d'état de noeud et des informations d'accusé de réception de séquence.
